# EUROPEAN PATENT SPECIFICATION

(11) **EP 4 408 731 B1**
(45) Date of publication and mention of the grant of the patent: **17.12.2025**
(21) Application number: 22809541.0
(22) Date of filing: 17.10.2022
(51) Int. Cl.: B63B 1/04, B63B 39/06, B63B 1/22, B63B 1/38, F16F 9/04, F16F 15/027, B63B 1/18, B63B 1/20

(54) **A FLAP DAMPER DEVICE FOR DAMPING OF MOTIONS OF A VESSEL FLAP RELATIVE TO A HULL OF AN AIR SUPPORTED VESSEL, AND A VESSEL WITH SUCH A FLAP DAMPER DEVICE**
KLAPPENDÄMPFERVORRICHTUNG ZUR DÄMPFUNG VON BEWEGUNGEN EINER SCHIFFSKLAPPE IN BEZUG AUF DEN RUMPF EINES LUFTGESTÜTZTEN SCHIFFS UND SCHIFF MIT SOLCH EINER KLAPPENDÄMPFERVORRICHTUNG
DISPOSITIF AMORTISSEUR DE VOLET POUR AMORTIR LES MOUVEMENTS D'UN VOLET DE RÉCIPIENT PAR RAPPORT À UNE COQUE D'UN RÉCIPIENT SUPPORTÉ PAR AIR, ET RÉCIPIENT DOTÉ D'UN TEL DISPOSITIF AMORTISSEUR DE VOLET

(30) Priority: 18.10.2021 NO 20211251
(43) Date of publication of application: 07.08.2024
(73) Proprietor: PASCAL TECHNOLOGIES AS, 0278 Oslo (NO)
(72) Inventor: LIVGÅRD, Tor-Kolbjørn, 3229 Sandefjord (NO)
(74) Representative: Acapo AS
(86) International application number: PCT/NO2022/050231
(87) International publication number: WO 2023/068936

(56) References cited:
- WO-A1-2020/093134
- WO-A1-92/08066
- DE-A1- 102008 045 492
- FR-A1- 2 657 581

## Description

The present invention is related to a flap damper device for a flap of an air supported vessel, and an air supported vessel comprising such a flap damper device. Further the flap damper device may be a control device for the flap.

Air cushioned vessels are known, such as surface-effect ships (SES), which combine features from hovercraft and catamaran hull design. There is also known a catamaran vessel from US 6672234 which includes an air cushion arranged in each of the hulls of the vessel. The air cushions, however, cover a relatively small area of the horizontal projection of each hull of the catamaran vessel. Furthermore, the angle of attach of the flap of each air cushion can be adjusted to a desired angle, but the flap is arranged in a static position and is not movable as such when the vessel is travelling. Consequently, there is no damping of the flaps.

For air cushioned vessels it is generally desirable to maintain a stable air cushion as the air supported vessel is travelling in water. Such vessels may, as shown in US 6672234, be provided with a recess in the hull for the air cushion and may further be provided with a flap. However, the flap of known solutions are controlled with hydraulics, which has a number of drawbacks. The hydraulic system is stiff and a hydraulically controlled flap and basically provides no damping effect on the flap. Further, a stiff hydraulic system causes reaction forces on the hull of the vessel when the vessel and the flap travel across waves in the water. In addition, a hydraulic system is heavy, large and takes up a large amount of space on the vessel.

Other state-of-the-art document related to a flap device planned vessel is WO2020093134 which relates to a planing system for a multi-hull watercraft comprising a hull defining a plurality of hulls and at least one channel between at least two of the hull portions comprises a planing surface and an actuator system. The planing surface is supported for movement within the at least one channel between an upper position and a lower position. The actuator system is arranged to displace the planing surface from the upper position to the lower position. The watercraft operates in a first mode when the planing surface is in the upper position and in a second mode when the planing surface is in the lower position. When the watercraft operates in the second mode, the planing surface engages water to cause the vessel to plane.

An objective of the present invention has been to improve the efficiency and to minimize energy losses of air supported vessels.

A further objective has been to effectively regulate the air cushion of air supported vessels.

A further objective has been to provide a good damping effect on the flap of an air supported vessel.

A further objective has been to reduce reaction forces on the hull of an air supported vessel when the vessel is travelling.

A further objective has been to obtain an air supported vessel with less need for maintenance and repair.

These objectives are met with a flap for an air supported vessel as defined in independent claim 1 and an air supported vessel as defined in claim 13.

The present invention provides a pneumatic flap damper device which is preferably cushioned by air. The flap damper device provides a number of advantages over the known hydraulic control systems for flap control. Air is much more compressible than hydraulic fluids and therefore provides a much better damping of the flap when the air supported vessel travels in water and waves hit the flap. The excellent dynamic damping provided by the pneumatic flap damper device prevents no or very small reaction forces on the hull of the air supported vessel when it is travelling through water and waves hit the flap. Since the flap is subjected to dynamic damping forces, the forces on the attachment devices that attached the flap to the hull, will be small causing less wear than a hydraulic damping device would do. In addition, a pneumatic system is substantially lighter than a hydraulic system and takes up less space on the vessel.

It should be noted that the longitudinal length and axis of the flap damper device and the longitudinal direction and axis of the bellow element are all the same and run through the centre of the flap damper device and the bellow element and generally extends in the direction of the movements that the flap damper device is designed to damp.

Hence, there is provided a flap damper device for damping of motions of an air-supported vessel flap relative to the hull of an air supported vessel, where the vessel flap is rotatably mounted to the hull along an inner edge of the vessel flap. The flap damper device comprises a first attachment unit and a second attachment unit where the first attachment unit is adapted to be securely attached to the hull of the air supported vessel and the second attachment unit is adapted to be securely attached to the vessel flap of the air-supported vessel so that the flap damper device is capable of damping flap motions when the vessel is travelling in water. The flap damper device further comprises a damper element which is attached to the first attachment unit and to the second attachment unit such that an air cavity is formed within the flap damper device for damping of vessel flap motions.

The damper element damps motions arising when the vessel is travelling in water.

The first attachment unit preferably comprises a first attachment ring for attachment of the damper element to a first attachment plate of the first attachment unit and the second attachment unit preferably comprises a second attachment ring for attachment of the damper element to a second attachment plate of the second attachment unit.

The air cavity within the flap damper device is preferably filled with pressurized air with a pressure which is controlled so that the flap damper device provides a desired damping effect. The desired pressure will be set so that the flap damper device is capable of providing sufficient damping and will depend on factors like the speed of the vessel, the size of the water waves where the vessel is travelling, the size of the vessel and the vessel flap, the weight of the vessel varying with passenger number, etc. The pressure control adjusts the pressure so that the flap damper device dynamically extends to give a desired angle of said vessel flap and provides a desired damping effect during travelling. The air pressure in the air cavity is taken to be at a desired level or within a desired range when the air pressure of the air cavity is at the desired level when no external forces acts on the flap damper device. The pressurized air will usually have a pressure that is substantially larger than atmospheric pressure.

The air cavity formed within the flap damper device is preferably limited by the first attachment unit and the second attachment unit in a longitudinal direction of the flap damper device and the damper element in a radial direction of the flap damper device.

The damper element preferably comprises a bellow element that is securely attached to the first attachment unit and to the second attachment unit, where the bellow element in its entirety, or at least partially, is made of an elastic material.

The bellow element comprises a plurality of bulges in the longitudinal direction of the bellow element, each bulge extending around the entire circumference of the bellow element.

The bellow element is preferably made of an elastomer, such as a rubber material.

The first attachment ring is preferably a first bead ring and the first attachment plate is preferably a first bead plate, and the bellow element preferably comprises a first bead at a first end portion of the bellow wherein the bellow can be attached to the first bead plate with the first bead ring.

Similarly, the second attachment ring is preferably a second bead ring and the second attachment plate is preferably a second bead plate, and the bellow element preferably comprises a second bead at a second end portion of the bellow wherein the bellow can be attached to the second bead plate with the second bead ring.

The bellow element is preferably at least partially made of an elastic material such that the length of the bellow element in its longitudinal direction is variable. The elastic bellow element and the pressurized air cavity within the bellow element will ensure that the flap damper device is capable of damping vessel flap motions when the air cavity is filled with air at a desired pressure as mentioned above.

The pressure of the air in the bellow element is preferably controlled and the desired pressure of the air can thus be continuously changed and adapted to the prevailing condition in sea, the travelling speed of the vessel etc.

The flap damper device preferably comprises a coupling socket for pressure air supply, the coupling socket which is arranged in the first attachment unit and is fluidly connected to the air cavity, and the coupling socket is adapted for fluid connection to an air supply on the air supported vessel for supply of pressurized air to the air cavity, for example with a suitable tubing, pipe or any other suitable means for conducting air from the air supply to the coupling socket.

In an embodiment, the flap damper element comprises a piston/cylinder arrangement where the piston is attached to the first attachment unit and the cylinder is attached to the second attachment unit or vice versa.

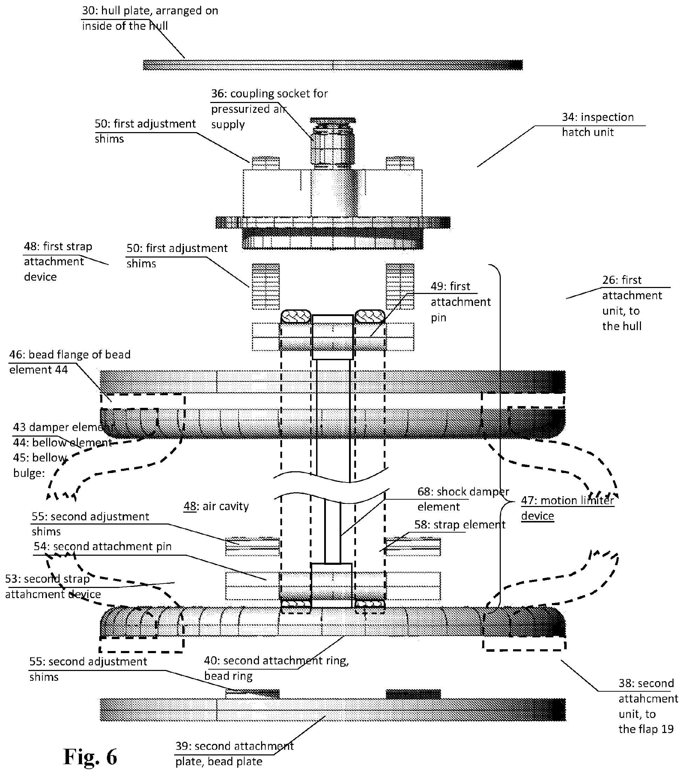

The piston/cylinder arrangement is preferably rotatably attached to the first attachment unit and the second attachment unit. In an embodiment such a piston/cylinder arrangement is arranged in combination with one or two strap elements arranged between the first and second attachment pins. An embodiment of this strap and shock damper combination is illustrated in Fig. 6.

The piston/cylinder arrangement is preferably a hydraulic piston/cylinder arrangement provided with a hydraulic fluid where the pressure of the hydraulic fluid is controlled to a desired level.

The pressure of the pressurized hydraulic fluid in the hydraulic system is preferably chosen so that the piston/cylinder arrangement provides a desired damping effect.

The pressure in the hydraulic system is preferably controlled so that the desired pressure of the hydraulic fluid can be continuously changed and adapted to the condition in sea, the travelling speed of the vessel etc.

The flap damper device is preferably provided with a motion limiter device which limits the maximum distance between the first attachment unit and the second attachment unit to a desired maximum distance. The motion limiter device will ensure that the that the flap damper device is not damaged when the vessel, on which the flap damper device is mounted, is travelling in rough waters.

The motion limiter device preferably comprises a first strap attachment device which is securely attached to the first attachment unit, a second strap attachment device which is securely attached to the second attachment unit, and a strap element which is connected to or attached to the first motion limiter part and the second motion limiter part.

The first strap attachment device preferably comprises a first attachment pin, the second strap attachment device preferably comprises a second attachment pin, and the strap element is preferably loop-shaped and arranged over the first attachment pin and the second attachment pin. When the flap damper device is extended in its longitudinal direction, it can only be extended to the point where the strap element is stretched to its maximum length and the first attachment pin and the second attachment pin, over which the strap element is arranged, will prevent the bellow element from being further extended.

The first strap attachment device is preferably provided with at least one first adjustment shim for adjustment of the position of the first adjustment pin and/or the second strap attachment device is preferably provided with at least one second adjustment shim for adjustment of the position of the second adjustment pin.

The strap element is preferably inelastic or at least essentially inelastic.

The strap element can, for example, be made of nylon. Hence, the strap element is a nylon strap, which is readily available commercially.

The motion limiter is preferably arranged within the air cavity of the flap damper device.

In a further embodiment of the motion limiter device, the motion limiter device comprises a double-acting piston/cylinder arrangement where the piston is attached to the first attachment unit and the cylinder is attached to the second attachment unit or vice versa.

The piston/cylinder arrangement is preferably a hydraulic piston/cylinder arrangement provided with a hydraulic fluid where the pressure of the hydraulic fluid is controlled to a desired level.

The first attachment unit comprises an inspection hatch which provides access into the air cavity for inspection and maintenance of the motion limiter.

The inspection hatch is preferably securely and disconnectably connected to the first attachment unit, for example with attachment elements such as bolts, screws or any other suitable attachment elements.

The first strap attachment device is preferably attached to the inspection hatch.

There is further provided an air supported vessel comprising a hull which is provided with an exterior hull recess at the bottom of the hull for an air cushion, and at least one vessel flap which is rotatably mounted to the hull in a rear part of the hull recess, where the air supported vessel further comprises at least one flap damper device as described above for damping of motions of the vessel flap, where the first attachment unit of the flap damper device is securely attached to the hull of the air supported vessel and the second attachment unit of the flap damper device is securely attached to the vessel flap of the air supported vessel.

The hull recess preferably extends in a longitudinal direction of the hull, where the hull recess is open in a rearward direction of the hull, and the air supported vessel, and preferably comprises a first sidewall, a second sidewall and a hull recess bottom which extends between the first sidewall and the second sidewall

The hull of the air supported vessel preferably comprises at least one hull aperture, and the first attachment unit of the flap damper device is preferably attached to the hull of the air supported vessel in a watertight manner such that water is prevented from entering the hull through the hull aperture, and such that the inspection hatch of the flap damper device can be accessed through the hull aperture from inside the hull, i.e. enabling the inspection hatch to be disconnected from and connected to the first attachment unit (i.e. unbolted/unscrewed from and bolted/screwed to the first attachment unit).

The vessel is preferably provided with a source of pressurized air which is fluidly connected to the coupling socket of the at least one flap damper device, for example with a tube element, a pipe or any other suitable means for conducting air, for supply of pressurized air to the air cavity of the flap damper device.

The source of pressurized air is preferably an air compressor or an air pump.

The air supported vessel preferably comprises a plurality of flap damper devices for damping of motions of the vessel flap.

The flap damper devices are preferably spaced out so that a balanced damping force is applied to the vessel flap when the vessel is travelling in water.

The vessel flap preferably has the shape of a plate which is flat, or at least substantially flat.

A non-limiting embodiment of the present invention will now be described with reference to the figures, where
Figure 1 shows the hull of a vessel according to the present invention.
Figure 2a and 2b is view from behind a vessel according to the present invention looking forward where a vessel flap arranged in a hull recess is shown with two flap damper devices mounted to the hull and the vessel flap.
Figure 3 shows a flap damper device according to the present invention.
Figure 4 shows an exploded perspective view of a flap damper device according to the present invention and shown in figures 2a-b and 3.
Figure 5 shows a sideview of a flap damper device shown in figure 4.
Figure 6 illustrates a sideview of a flap damper device similar to Fig. 5, with an embodiment combining with one or two strap elements arranged between the first and second attachment pins.

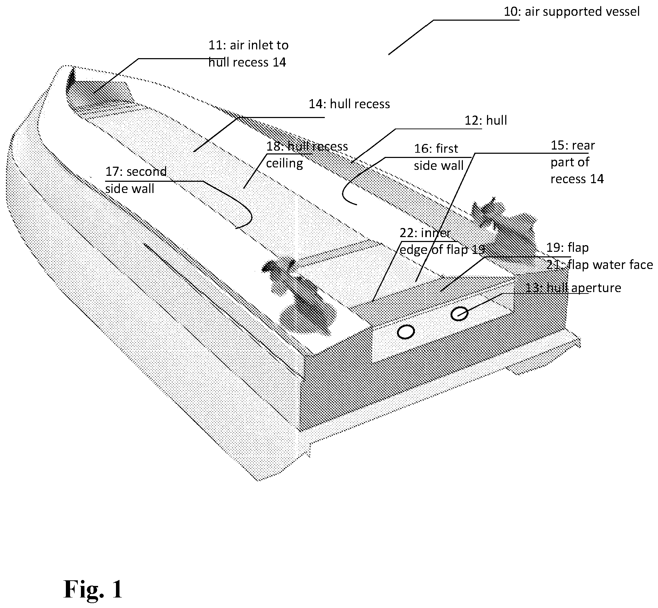

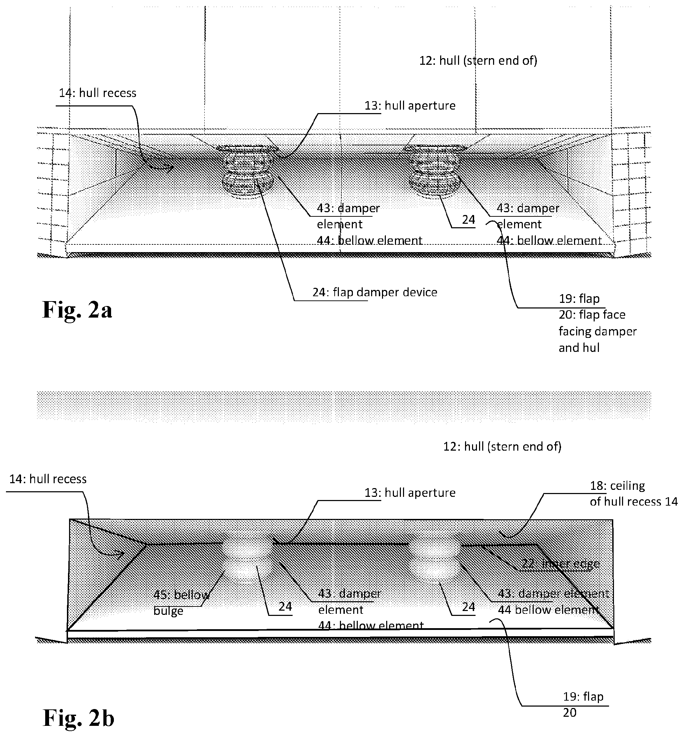

The flap damper device 24 according to the present invention is shown in figures 2-5, and an air-supported vessel 10 according to the |present invention, on which one or more flap damper devices 24 is mounted, is shown in figure 1.

As shown in figure 1, the air-supported vessel 10 comprises a hull 12 with a hull recess 14 extending along at least a portion of the outer bottom of the hull 12, and preferably along nearly the entire outer bottom of the hull 12 as indicated in figure 1. The hull recess 14 is formed by a first side wall 16 and a second side wall 17 which extends from the aft of the hull 12, where they are substantially parallel to each other, and to a front portion of the hull 12 where the first side wall 16 and the second side wall 17 are bent towards each other until they meet in a bow portion as shown in figure 1. An air inlet opening 11 are provided within the hull recess 14, preferably at the fore of the hull recess 14, where air is pumped in to produce an air cushion which improves the seafaring characteristics and properties of the vessel 10.

At the aft of the hull recess 14, a vessel flap 19 is arranged in the hull recess 14. The vessel flap 19 is rotatably mounted to the ceiling of the hull recess about an axis of rotation that is substantially transverse to the fore-aft direction of the hull 12. Preferably, the vessel flap 19 is hingedly attached to the hull recess 14, for example with one or more bolt devices or any other suitable devices that will allow the vessel flap 19 to be rotatably attached to the ceiling 18 of hull recess 14.

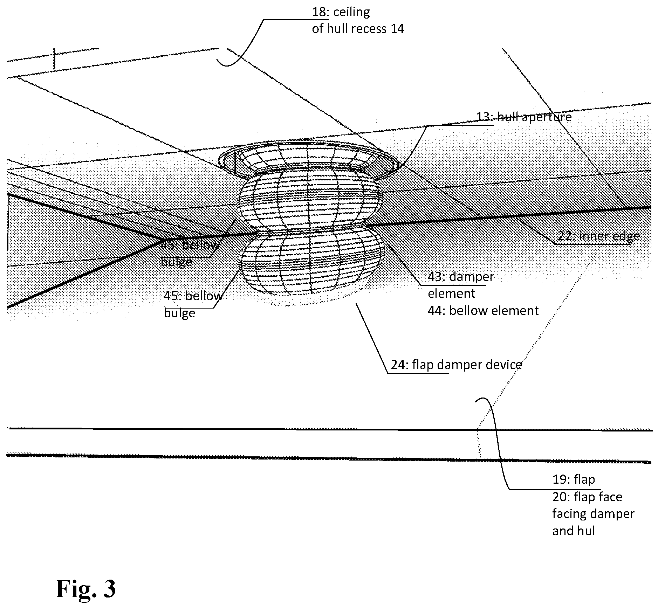

The hull recess is further provided with at least one, but preferably two or more hull apertures 13 arranged aft of the attachment of the vessel flap 19 to the hull recess ceiling 18. In figure 1 there is shown two hull apertures 13. The hull recesses 13 are used to access to the interior of flap damper devices 24, as shown in figures 2a-2b and 3, which are attached in one end to the vessel flap 19 and the other end to the hull so that they cover respective hull apertures 13 in a water tight manner so that water is prevented from entering the hull 12 through the hull apertures 13.

The flap damper devices 24 will damp the motion of the vessel flap 19 when the air-supported vessel 10 is travelling through water and help to maintain the air-cushion that is formed within the hull recess 14.

An embodiment of the flap damper device 24 according to the present invention will now be described with reference to figures 2-5.

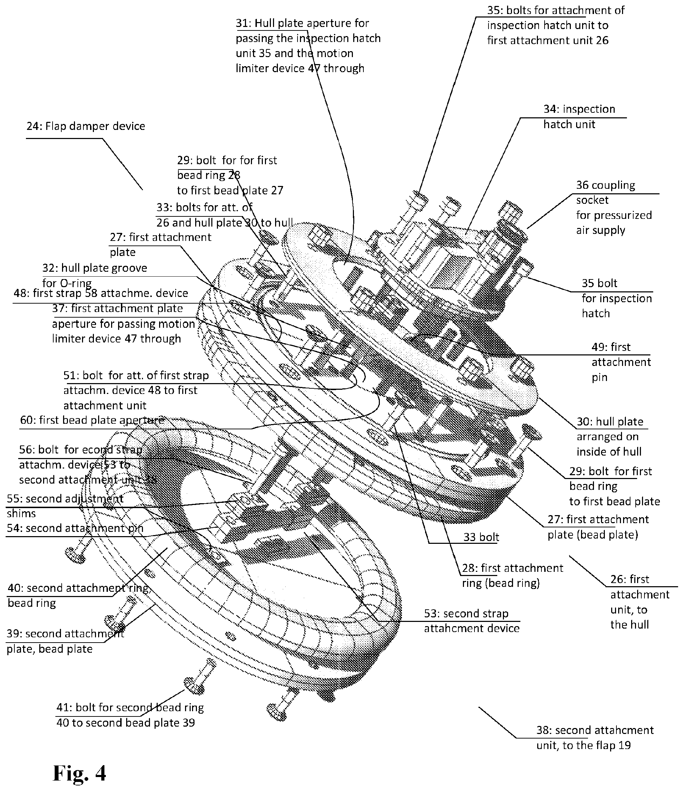

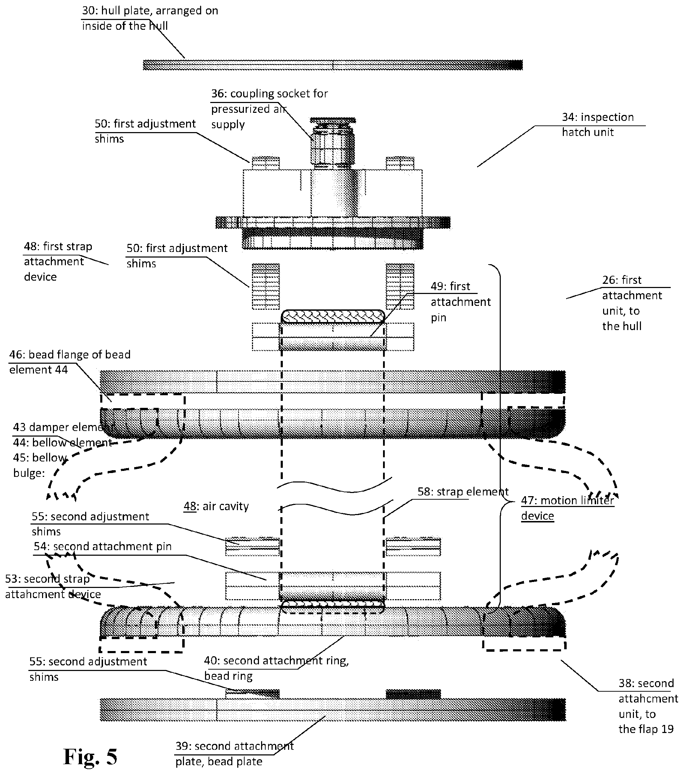

As can be seen in figures 4 and 5, the embodiment of the flap damper device 24 comprises a first attachment unit 26 which is adapted to be attached to the hull of an air-supported vessel, such as the air-supported vessel 10 shown in figure 1. The flap damper device 24 further comprises a second attachment unit 38 which is adapted to be attached to the vessel flap 19 of an air-supported vessel, such as the air-supported vessel 10 shown in figure 1.

The embodiment of the flap damper device 24 shown in the figures 2-5 is further provided with a bellow element 44. The bellow element 44 is at least partially, but preferably completely, made of an elastic material such that the length of the bellow element 44 in its longitudinal direction V (see figure 5) is variable, i.e. the bellow element 44 can be extended and compressed. The bellow element 44 can, for example, be made of a rubber material, such as a rubber materials used in conventional tires.

The bellow element 44 is preferably designed, or made, with at least one bellow bulge 45. The at least one bellow bulge 45 improves the damping effect of the flap damper device 24 and makes the bellow element 44 more durable. The embodiment of the bellow element 44 shown on figures 2a-2b and 3, is provided with two bellow bulges 45, but the bellow element 44 can be made with any number of bulges 34.

The bellow element 44 is, at one end in the longitudinal direction of the bellow element 44, adapted to be securely attached to the first attachment unit 26. The bellow element 44 is further, at the opposite end of the bellow element 44 in its longitudinal direction, adapted to be securely attached to the second attachment unit 38.

With this arrangement an air cavity 42 is obtained limited by the first attachment unit 26 and the second attachment unit 38 in the longitudinal direction, and the bellow element 38 in a radial direction. The pressure of the air in the air cavity is adjusted to a desired pressure which is at least equal to the atmospheric pressure, but in most instances larger than atmospheric pressure. The desired pressure of the air in the air cavity will depend on the external loads on the vessel flap, to which the flap damper device 24 is attached. Parameters like the travelling speed of the vessel and the sea conditions will affect the external loads and forces on the vessel flap 19. The pressure of the air in the air cavity 42 may therefore be adjustable, either manually by an operator or automatically by a control system including sensors that feed travelling speed, and/or external forces on the vessel flap and/or parameters related to wave conditions and/or other relevant parameters to the control system's control unit which continuously controls and adjusts the air pressure in the air cavity based on data received from the sensors and a desired damping effect of the flap damper device 24.

To attach the bellow element 44 to the first attachment unit 26 and the second attachment unit 38 the bellow element 44 can be provided with respective bead elements (not shown in the figures), or similar attachment elements, at its ends in the longitudinal direction The bead elements comprise bead flanges 46. It should be mentioned that the bellow element 44 can be attached to the first attachment unit 26 and the second attachment unit 38 in many different ways as long as the attachment to the first and second attachment unit 26, 38 is secure and watertight.

The first attachment unit 26 comprises a first attachment plate or bead plate 27 and a first attachment ring or bead ring 28 which can be securely attached to the first bead plate 27 for example with bolts or screws 29, or any other suitable fastening means.

Similarly, the second attachment unit 38 comprises a second attachment plate or bead plate 39 and a first attachment ring or bead ring 40 which can be securely attached to the second bead plate 39, for example with bolts or screws 41, or any other suitable fastening means.

The bead flange 46 provided at either end of the bellow element 44 are attached to the respectively the first attachment unit 26 and the second attachment unit 38 by letting the bead flange 46 be squeezed between the first bead ring 28 and first bead plate 27 and between the second bead ring 40 and the second bead plate 39. Since the bellow element 44, and hence the bead flange 46 elements, are made of a rubber material, a watertight attachment of the bellow element 44 to the first attachment unit 26 and to the second attachment unit 38 is obtained.

To avoid that the length of the bellow element 44 is extended too far, the flap damper device 24 is preferably provided with a motion limiter device 47 which limits the extent to which the bellow element 44 can be extended to a maximum length to prevent that the flap damper device 24 and/or the vessel flap 19, to which the flap damper device is attached, is damaged.

The motion limiter device 47 can be designed in several ways. An embodiment of a preferred motion limiter device 47 is shown on figures 4 and 5. As can be seen on the figures, the motion limiter device 47 is preferably arranged within the air cavity 42 of the flap damper device 24.

The motion limiter device 47 comprises a first strap attachment device 48 and a second strap attachment device 53.

The first strap attachment device 48 is securely attached to the first attachment unit 26, for example with bolts or screws 51 or any other suitable fastening means.

The second attachment device 53 is attached to the second attachment unit 38, for example with bolts or screws 56 or any other suitable fastening means.

The first strap attachment device 48 comprises a first attachment pin 49 and the second strap attachment device 53 comprises a second attachment pin 54. The motion limiter device 47 further comprises at least one strap element 58, which has the shape of a loop and is arranged over and around the first attachment pin 49 and below and about the second attachment pin 54. The strap element 58 is preferably made of a material which is inelastic, or at least substantially inelastic.

With the motion limiter device 47, the length of the strap element 58 limits the extent to which the bellow element 44 can be extended, and the extent to which the bellow element can be extended can be limited to a desired length by choosing a strap element with a length that will prevent the bellow to be extended beyond the desired length. The strap element 58 may be replaced while the vessel is in the sea, via the inspection hatch which provides access into the air cavity for inspection and maintenance.

The strap element can, for example, be made of a nylon material. Strap elements made of nylon are widely available commercially and can be provided in any desired width, height and thickness. These nylon straps have a high tensile strength and a strap element with a desired tensile strength can easily be obtained. Such nylon straps are commonly used for example in various types of outdoor equipment such as backpacks and in many other applications.

The first strap attachment device 48 and the second strap attachment device 53 are preferably provided with a rounded shape to prevent damage on the strap element.

The flap damper device 24 can further be provided with various shims 50, 55 which can be replaced with shims having different lengths in the longitudinal direction which will allow the distance between the first strap attachment pin 49 and the second strap attachment pin 54 to be adjusted to a desired length when the bellow element is in its neutral position, i.e. the bellow element 44 is neither extended nor compressed.

Although not shown in the figures, it should be mentioned that the motion limiter device could also be a conventional, double-acting piston/cylinder arrangement which is arranged in the air cavity 42. The piston could be attached to the first attachment unit 26 and the cylinder to the second attachment unit 38, or vice versa.

The first bead plate 27 is provided with a first bead plate aperture 60 which provides access to the interior of the flap damper device 24, i.e. the air cavity 42 of the flap damper device 24. The first attachment unit 26 is further provided with an inspection hatch 34 which is attached to the first bead plate 27 with screws or bolts 35, or any other suitable fastening means, such that the inspection hatch covers the first bead plate opening 60. The inspection hatch 34 can be detached from and reattached to the first bead plate 27, thereby providing access to the air cavity (42) when the flap damper device 24 is installed on the air-supported vessel 10.

The first attachment unit 26 further comprises a hull plate 30 with a hull plate aperture 31 for attachment of the flap damper device 24 to the hull of the air-supported vessel 10. The air-supported vessel 10 is provided with at least one hull aperture 13, as indicated on figure 1, and the flap damper device is attached to the hull 12 by placing the first bead plate 27 against the outside surface of the hull 12 such that the first bead plate aperture 60 substantially aligns with the hull aperture 13. The hull plate 30 is placed against the inside surface of the hull 12 such that the hull plate aperture 31 substantially aligns with the hull aperture 13. The flap damper device 24 and the hull plate 30 are securely fastened to the hull 12 and the first bead plate 27 with bolts or screws 33, or any other suitable fastening means. The first bead plate bead plate 27 is preferably provided with a hull plate groove 32 in which a sealing element, such as an o-ring, is arranged to prevent water to leak into the inside of the hull 12 through the hull aperture 13.

Because of the hull aperture 13, there is access to the inspection hatch 34 from the inside of the hull 12. When access to the interior of the flap damper device 24 is needed, for example to change a worn-out strap element or change the strap element to another strap element with a different length, the inspection hatch 34 can be detached to provide access to the air cavity and thereafter reattached from inside the hull 12.

The inspection hatch is preferably also provided with a pressure air coupling socket 36. The air-supported vessel 10 is preferably provided with a supply of compressed air, for example from a compressor or a pump, which is fluidly connected to the pressure air coupling socket 36 with the necessary pipe(s), tube(s) or any other suitable devices that is capable of conducting compressed air. The coupling socket 36 can, if desired, be actively controlled as mentioned above, such that the air pressure in the air cavity of the flap damper device 24 is continuously controlled and adjusted to the desired level.

### Components list:

| | |
|---|---|
| **10** | **Air-supported vessel** |
| **11** | Air inlet opening |
| **12** | Hull |
| **13** | Hull aperture (for access to flap damper device) |
| **14** | Hull recess |
| **15** | Rear part (of hull recess) |
| **16** | First side wall |
| **17** | Second side wall |
| **18** | Hull recess ceiling |
| **19** | Vessel flap |
| **20** | First surface (of vessel flap - facing the hull and flap damper device) |
| **21** | Second surface (of vessel flap - facing the water) |
| **22** | Inner edge (of vessel flap) |
| **23** | |
| **24** | **Flap damper device** |
| **25** | |
| **26** | **First attachment unit** ((bead plate + bead ring + inspection hatch) - attach to hull) |
| **27** | First attachment plate (bead plate) |
| **28** | First attachment ring (bead ring) |
| **29** | Bolt or screw (for attachment of ring to first bead plate) |
| **30** | Hull plate (arranged on the inside of the hull) |
| **31** | Hull plate aperture (for passing through inspection hatch and the motion limiter) |
| **32** | Hull plate groove (for sealing element (o-ring)) |
| **33** | Bolt or screw (for attachment of first attachment unit and hull plate to the hull of the vessel) |
| **34** | **Inspection hatch unit** |
| **35** | Bolt or screw (for attachment of inspection hatch to first attachment unit) |
| **36** | coupling socket (for pressurized air supply) |
| **37** | First attachment plate aperture (for passing through motion limiter device) |
| **38** | **Second attachment unit** ((bead plate + bead ring) - festes til vessel flap) |
| **39** | Second attachment plate (bead plate) |
| **40** | Second attachment ring (bead ring) |
| **41** | Bolt or screw (for attachment of second bead ring to second bead plate) |
| **42** | |
| **43** | Damper element |
| **44** | Bellow element |
| **45** | Bellow bulge |
| **46** | Bead flange of bellows element 44 |
| **47** | **Motion limiter device** |
| **48** | **First strap attachment device** |
| **49** | First attachment pin |
| **50** | First adjustment shim |
| **51** | Bolt or screw (for attachment of first strap attachment device to first attachment unit (inspection hatch)) |
| **52** | |
| **53** | **Second strap attachment device** |
| **54** | Second attachment pin |
| **55** | Second adjustment shim |
| **56** | Bolt or screw (for attachment of second strap attachment device to second attachment unit (second attachment plate)) |
| **57** | |
| **58** | **Strap element** |
| **59** | |
| **60** | First bead plate aperture |
| **61** | |
| **62** | |
| **63** | |
| **64** | |
| **65** | |
| **66** | |
| **67** | |
| **68** | Piston and cylinder arrangement |

## Claims

1. A flap damper device (24) for damping of motions of a vessel flap (19) relative to a hull (12) of an air supported vessel (10), wherein
- the vessel flap (19) is rotatably mounted to the hull (12) along an inner edge (22) of the vessel flap (19),
- the flap damper device (24) comprising
- a first attachment unit (26) and
- a second attachment unit (38),
- wherein the first attachment unit (26) is adapted to be securely attached to the hull (12) of the air supported vessel (10), and
- the second attachment unit (38) is adapted to be securely attached to the vessel flap (19) of the air-supported vessel (10), so as for that the flap damper device (24) being arranged for damping flap motions when the air supported vessel (10) is running in water,
- the flap damper device (24) further comprising a damper element (43) with an air cavity (42), the damper element (43) is attached to the first attachment unit (26) and to the second attachment unit (38) such that a closed air cavity (42) is formed within the flap damper device (24) for damping of vessel flap motions, **characterized in that**
- the first attachment unit (26) comprises an inspection hatch (34) which provides access into the air cavity (42) for inspection and maintenance of a motion limiter device (47).

2. The flap damper device according to claim 1,
wherein the air cavity (42) within the flap damper device (24) is filled with pressurized air with a pressure so that the flap damper device (24) provides a damping effect.

3. The flap damper device according to claim 1 or 2,
wherein the first attachment unit (26) comprises a first attachment ring (28) for attachment of a first bead flange (46) of the damper element (43) to a first attachment plate (27) of the first attachment unit (26) and the second attachment unit (38) comprises a second attachment ring (40) for attachment of a second bead flange (46) of the damper element (43) to a second attachment plate (39) of the second attachment unit (38).

4. The flap damper device according to one of the claims 1-3,
wherein the damper element (43) comprises a bellow element (44) that is securely attached to the first attachment unit (26) and to the second attachment unit (38), where the bellow element (44) in its entirety, or at least partially, is made of an elastic material.

5. The flap damper device according to one of the claims 1-4,
wherein the flap damper device (24) comprises a pressure air coupling socket (36) which is arranged in the first attachment unit (26) and is fluidly connected to the air cavity (42), the coupling socket (36) being adapted to be connected to an air supply on the air supported vessel (10) for supply of pressurized air to the air cavity (42).

6. The flap damper device according to one of the claims 1-5,
wherein the motion limiter device (47) limits the maximum distance between the first attachment unit (26) and the second attachment unit (38) to a desired maximum distance.

7. The flap damper device according to claim 6,
wherein the motion limiter device (47) comprises a first strap attachment device (48) which is securely attached to the first attachment unit (26), a second strap attachment device (53) which is securely attached to the second attachment unit (38), and a strap element (58) which is connected to or attached to the first strap attachment device (48) and the second strap attachment device (53).

8. The flap damper device according to claim 7,
wherein the first strap attachment device (48) comprises a first attachment pin (49), the second strap attachment device (53) comprises a second attachment pin (54), and the strap element (58) is loop-shaped and arranged over the first attachment pin (49) and the second attachment pin (54).

9. The flap damper device according to claim 7 or 8,
wherein the first strap attachment device (48) is provided with at least one first adjustment shim (50) for adjustment of the position of the first adjustment pin (49), and/or the second strap attachment device (53) is provided with at least one second adjustment shim (55) for adjustment of the position of the second adjustment pin (54).

10. The flap damper device according to one of the claims 5-9,
wherein the motion limiter device (47) is arranged within the air cavity (42) of the flap damper device (24).

11. The flap damper device according to claim 1,
wherein the inspection hatch (34) is securely and disconnectably connected to the first attachment unit (26).

12. The flap damper device according to any of the preceding claims,
comprising a piston/cylinder arrangement (68) connected between the first attachment unit (26) and the cylinder is attached to the second attachment unit (38).

13. An air supported vessel (10) comprising a hull (12) which is provided with an exterior hull recess (14) at the bottom of the hull for an air cushion, and at least one vessel flap (19) which is rotatably mounted to the hull (12) in a rear part (15) of the hull recess (14), the air supported vessel (10) further comprising at least one flap damper device (24) according to any one of the claims 1-12 for damping of motions of the vessel flap (19), where the first attachment unit (26) of the flap damper device (24) is securely attached to the hull (12) of the air supported vessel (10) and the second attachment unit (38) of the flap damper device (24) is securely attached to the vessel flap (19) of the air supported vessel (10).

14. The air supported vessel according to claim 13,
wherein the hull (12) of the vessel comprises at least one hull aperture (13), and the first attachment unit (26) of the flap damper device (24) is attached to the hull (12) of the air supported vessel (10) in a watertight manner preventing water to enter the hull (12) through the hull aperture (13), and such that the inspection hatch (34) of the flap damper device (24) can be accessed through the hull aperture (13) from inside the hull (12).

15. The air supported vessel according to any one of the claims 13-14,
wherein the pressure of the source of pressurized air is adjustable in order for adjusting the pressure of the air cavity (42) in order to adjust the length and the spring stiffness of the flap damper device (24) based on a control system including sensors that feed travelling speed, and/or external forces on the vessel flap and/or parameters related to wave conditions and/or other relevant parameters to the control system's control unit which continuously controls and adjusts the air pressure in the air cavity based on data received from the sensors and a desired damping effect of the flap damper device (24).

## Patentansprüche

1. Klappendämpfervorrichtung (24) zum Dämpfen von Bewegungen einer Schiffsklappe (19) relativ zu einem Rumpf (12) eines Luftkissenfahrzeugs (10), wobei
- die Schiffsklappe (19) drehbar an dem Rumpf (12) entlang eines inneren Rands (22) der Schiffsklappe (19) montiert ist,
- die Klappendämpfervorrichtung (24) Folgendes umfasst
- eine erste Befestigungseinheit (26) und
- eine zweite Befestigungseinheit (38),
- wobei die erste Befestigungseinheit (26) angepasst ist, um sicher an dem Rumpf (12) des Luftkissenfahrzeugs (10) befestigt zu sein, und
- die zweite Befestigungseinheit (38) angepasst ist, um sicher an der Schiffsklappe (19) des Luftkissenfahrzeugs (10) befestigt zu sein, sodass die Klappendämpfervorrichtung (24) zum Dämpfen von Klappenbewegungen angeordnet ist, wenn das Luftkissenfahrzeug (10) sich in Wasser bewegt,
- wobei die Klappendämpfervorrichtung (24) ferner ein Dämpferelement (43) mit einem Luftraum (42) umfasst, das Dämpfungselement (43) an der ersten Befestigungseinheit (26) und an der zweiten Befestigungseinheit (38) so befestigt ist, dass ein geschlossener Luftraum (42) innerhalb der Klappendämpfervorrichtung (24) zum Dämpfen von Schiffsklappenbewegungen gebildet wird, **dadurch gekennzeichnet, dass**
- die erste Befestigungseinheit (26) eine Inspektionsluke (34) umfasst, die Zugang zu dem Luftraum (42) für die Inspektion und Wartung einer Bewegungsbegrenzervorrichtung (47) bereitstellt.

2. Die Klappendämpfervorrichtung nach Anspruch 1, wobei der Luftraum (42) innerhalb der Klappendämpfervorrichtung (24) mit Druckluft mit einem Druck gefüllt ist, sodass die Klappendämpfervorrichtung (24) eine Dämpfungswirkung bereitstellt.

3. Klappendämpfervorrichtung nach Anspruch 1 oder 2, wobei die erste Befestigungseinheit (26) einen ersten Befestigungsring (28) für die Befestigung eines ersten Wulstflansches (46) des Dämpferelements (43) an einer ersten Befestigungsplatte (27) der ersten Befestigungseinheit (26) umfasst und die zweite Befestigungseinheit (38) einen zweiten Befestigungsring (40) für die Befestigung eines zweiten Wulstflansches (46) des Dämpfungselements (43) an einer zweiten Befestigungsplatte (39) der zweiten Befestigungseinheit (38) umfasst.

4. Klappendämpfervorrichtung nach einem der Ansprüche 1 bis 3, wobei das Dämpfungselement (43) ein Balgelement (44) umfasst, das sicher an der ersten Befestigungseinheit (26) und an der zweiten Befestigungseinheit (38) befestigt ist, wobei das Balgelement (44) in seiner Gesamtheit oder zumindest teilweise aus einem elastischen Material besteht.

5. Klappendämpfervorrichtung nach einem der Ansprüche 1 bis 4, wobei die Klappendämpfervorrichtung (24) eine Druckluftkupplungsbuchse (36) umfasst, die in der ersten Befestigungseinheit (26) angeordnet und fluidisch mit dem Luftraum (42) verbunden ist, wobei die Kupplungsbuchse (36) angepasst ist, um mit einer Luftzufuhr an dem Luftkissenfahrzeug (10) verbunden zu werden, um den Luftraum (42) mit Druckluft zu versorgen.

6. Klappendämpfervorrichtung nach einem der Ansprüche 1 bis 5, wobei die Bewegungsbegrenzervorrichtung (47) den maximalen Abstand zwischen der ersten Befestigungseinheit (26) und der zweiten Befestigungseinheit (38) auf einen gewünschten maximalen Abstand begrenzt.

7. Klappendämpfervorrichtung nach Anspruch 6, wobei die Bewegungsbegrenzervorrichtung (47) eine erste Riemenbefestigungsvorrichtung (48), die sicher an der ersten Befestigungseinheit (26) befestigt ist, eine zweite Riemenbefestigungsvorrichtung (53), die sicher an der zweiten Befestigungseinheit (38) befestigt ist, und ein Riemenelement (58) umfasst, das mit der ersten Riemenbefestigungsvorrichtung (48) und der zweiten Riemenbefestigungsvorrichtung (53) verbunden oder daran befestigt ist.

8. Klappendämpfervorrichtung nach Anspruch 7, wobei die erste Riemenbefestigungsvorrichtung (48) einen ersten Befestigungsstift (49) umfasst, die zweite Riemenbefestigungsvorrichtung (53) einen zweiten Befestigungsstift (54) umfasst und das Riemenelement (58) schlaufenförmig ist und über dem ersten Befestigungsstift (49) und dem zweiten Befestigungsstift (54) angeordnet ist.

9. Klappendämpfervorrichtung nach Anspruch 7 oder 8, wobei die erste Riemenbefestigungsvorrichtung (48) mit mindestens einer ersten Einstellscheibe (50) für die Einstellung der Position des ersten Einstellstifts (49) bereitgestellt ist und/oder die zweite Riemenbefestigungsvorrichtung (53) mit mindestens einer zweiten Einstellscheibe (55) für die Einstellung der Position des zweiten Einstellstifts (54) bereitgestellt ist.

10. Klappendämpfervorrichtung nach einem der Ansprüche 5 bis 9, wobei die Bewegungsbegrenzervorrichtung (47) innerhalb des Luftraums (42) der Klappendämpfervorrichtung (24) angeordnet ist.

11. Klappendämpfervorrichtung nach Anspruch 1,
wobei die Inspektionsluke (34) sicher und lösbar mit der ersten Befestigungseinheit (26) verbunden ist.

12. Klappendämpfervorrichtung nach einem der vorstehenden Ansprüche, umfassend eine Kolben-/Zylinderanordnung (68), die zwischen der ersten Befestigungseinheit (26) und der zweiten Befestigungseinheit (38) angebracht ist.

13. Luftkissenfahrzeug (10) umfassend einen Rumpf (12), der mit einer äußeren Rumpfaussparung (14) An dem Boden des Rumpfes für ein Luftkissen bereitgestellt ist, und mindestens eine Schiffsklappe (19), die drehbar an dem Rumpf (12) in einem hinteren Teil (15) der Rumpfaussparung (14) montiert ist, wobei das Luftkissenfahrzeug (10) ferner mindestens eine Klappendämpfervorrichtung (24) nach einem der Ansprüche 1 bis 12
zum Dämpfen von Bewegungen der Schiffsklappe (19) umfasst,
wobei die erste Befestigungseinheit (26) der Klappendämpfervorrichtung (24) sicher an dem Rumpf (12) des Luftkissenfahrzeugs (10) befestigt ist und die zweite Befestigungseinheit (38) der Klappendämpfervorrichtung (24) sicher an der Schiffsklappe (19) des Luftkissenfahrzeugs (10) befestigt ist.

14. Luftkissenfahrzeug nach Anspruch 13,
wobei der Rumpf (12) des Schiffes mindestens eine Rumpföffnung (13) umfasst und die erste Befestigungseinheit (26) der Klappendämpfervorrichtung (24) an dem Rumpf (12) des Luftkissenfahrzeugs (10) in wasserdichter Weise befestigt ist, um das Eindringen von Wasser in den Rumpf (12) durch die Rumpföffnung (13) zu verhindern, und sodass die Inspektionsluke (34) der Klappendämpfervorrichtung (24) durch die Rumpföffnung (13) von dem Inneren des Rumpfes (12) aus zugänglich ist.

15. Luftkissenfahrzeug nach einem der Ansprüche 13 bis 14,
wobei der Druck der Druckluftquelle zum Einstellen des Drucks des Luftraums (42) einstellbar ist, um die Länge und die Federsteifigkeit der Klappendämpfervorrichtung (24) basierend auf einem Steuersystem einzustellen, das Sensoren einschließt, die Fahrgeschwindigkeit und/oder externe Kräfte auf die Schiffsklappe und/oder Parameter in Bezug auf die Wellenbedingungen und/oder andere relevante Parameter der Steuereinheit des Steuersystems zuführen, die kontinuierlich den Luftdruck in der Luftkammer basierend auf den von den Sensoren empfangenen Daten und einer gewünschten Dämpfungswirkung der Klappendämpfervorrichtung (24) steuert und einstellt.

## Revendications

1. Dispositif d'amortissement à clapet (24) pour amortir des mouvements d'un clapet de navire (19) par rapport à la coque (12) d'un navire à sustentation pneumatique (10), dans lequel
- le clapet de navire (19) est monté rotatif sur la coque (12) le long d'un bord intérieur (22) du clapet de navire (19),
- le dispositif d'amortissement à clapet (24) comprenant
- une première unité de fixation (26) et
- une seconde unité de fixation (38),
- dans lequel la première unité de fixation (26) est adaptée pour être solidement fixée à la coque (12) du navire à sustentation pneumatique (10), et
- la seconde unité de fixation (38) est adaptée pour être solidement fixée au clapet de navire (19) du navire à sustentation pneumatique (10), de sorte que le dispositif d'amortissement à clapet (24) soit conçu pour amortir les mouvements de clapet lorsque le navire à sustentation pneumatique (10) coule dans l'eau,
- le dispositif d'amortissement à clapet (24) comprend en outre un élément d'amortissement (43) avec une cavité d'air (42), l'élément d'amortissement (43) est fixé à la première unité de fixation (26) et à la seconde unité de fixation (38) de sorte qu'une cavité d'air fermée (42) est formée à l'intérieur du dispositif d'amortissement à clapet (24) pour l'amortissement des mouvements de clapet de navire, **caractérisé en ce que**
- la première unité de fixation (26) comprend une trappe d'inspection (34) qui permet d'accéder à la cavité d'air (42) pour l'inspection et l'entretien d'un dispositif de limitation de mouvement (47).

2. Dispositif d'amortissement à clapet selon la revendication 1, dans lequel la cavité d'air (42) à l'intérieur du dispositif d'amortissement à clapet (24) est remplie d'air pressurisé avec une pression telle que le dispositif d'amortissement à clapet (24) fournit un effet d'amortissement.

3. Dispositif d'amortissement à clapet selon la revendication 1 ou 2, dans lequel la première unité de fixation (26) comprend un premier anneau de fixation (28) pour la fixation d'une première bride à bourrelet (46) de l'élément d'amortissement (43) à une première plaque de fixation (27) de la première unité de fixation (26) et la seconde unité de fixation (38) comprend un second anneau de fixation (40) pour la fixation d'une seconde bride à bourrelet (46) de l'élément d'amortissement (43) à une seconde plaque de fixation (39) de la seconde unité de fixation (38).

4. Dispositif d'amortissement à clapet selon l'une des revendications 1 à 3, dans lequel l'élément d'amortissement (43) comprend un élément à soufflet (44) qui est solidement fixé à la première unité de fixation (26) et à la seconde unité de fixation (38), l'élément à soufflet (44) étant entièrement, ou au moins partiellement, constitué d'un matériau élastique.

5. Dispositif d'amortissement à clapet selon l'une des revendications 1 à 4, dans lequel le dispositif d'amortissement à clapet (24) comprend une douille de couplage d'air sous pression (36) qui est disposée dans la première unité de fixation (26) et est reliée fluidiquement à la cavité d'air (42), la douille de couplage (36) étant adaptée pour être connectée à une alimentation en air sur le navire à sustentation pneumatique (10) pour l'alimentation en air sous pression de la cavité d'air (42).

6. Dispositif d'amortissement à clapet selon l'une des revendications 1 à 5, dans lequel le dispositif de limitation de mouvement (47) limite la distance maximale entre la première unité de fixation (26) et la seconde unité de fixation (38) à une distance maximale souhaitée.

7. Dispositif d'amortissement à clapet selon la revendication 6, dans lequel le dispositif de limitation de mouvement (47) comprend un premier dispositif de fixation de sangle (48) qui est solidement fixé à la première unité de fixation (26), un second dispositif de fixation de sangle (53) qui est solidement fixé à la seconde unité de fixation (38), et un élément de sangle (58) qui est relié ou fixé au premier dispositif de fixation de sangle (48) et au second dispositif de fixation de sangle (53).

8. Dispositif d'amortissement à clapet selon la revendication 7, dans lequel le premier dispositif de fixation de sangle (48) comprend une première broche de fixation (49), le second dispositif de fixation de sangle (53) comprend une seconde broche de fixation (54), et l'élément de sangle (58) est en forme de boucle et disposé sur la première broche de fixation (49) et la seconde broche de fixation (54).

9. Dispositif d'amortissement à clapet selon la revendication 7 ou 8, dans lequel le premier dispositif de fixation de sangle (48) est pourvu d'au moins une première cale de réglage (50) pour le réglage de la position de la première broche de réglage (49), et/ou le second dispositif de fixation de sangle (53) est pourvu d'au moins une seconde cale de réglage (55) pour le réglage de la position de la seconde broche de réglage (54).

10. Dispositif d'amortissement à clapet selon l'une des revendications 5 à 9, dans lequel le dispositif de limitation de mouvement (47) est disposé dans la cavité d'air (42) du dispositif d'amortissement à clapet (24).

11. Dispositif d'amortissement à clapet selon la revendication 1,
dans lequel la trappe d'inspection (34) est reliée de manière sûre et déconnectable à la première unité de fixation (26).

12. Dispositif d'amortissement à clapet selon l'une quelconque des revendications précédentes, comprenant un ensemble piston/cylindre (68) relié entre la première unité de fixation (26) et le cylindre fixé à la seconde unité de fixation (38).

13. Navire à sustentation pneumatique (10) comprenant une coque (12) pourvue d'un évidement de coque extérieur (14) au fond de la coque pour un coussin d'air, et au moins un clapet de navire (19) monté rotatif sur la coque (12) dans une partie arrière (15) de l'évidement de coque (14), le navire à sustentation pneumatique (10) comprenant en outre au moins un dispositif d'amortissement à clapet (24) selon l'une quelconque des revendications 1 à 12
pour l'amortissement des mouvements du clapet de navire (19),
la première unité de fixation (26) du dispositif d'amortissement à clapet (24) est solidement fixée à la coque (12) du navire à sustentation pneumatique (10) et la seconde unité de fixation (38) du dispositif d'amortissement à clapet (24) est solidement fixée au clapet de navire (19) du navire à sustentation pneumatique (10).

14. Navire à sustentation pneumatique selon la revendication 13,
dans lequel la coque (12) du navire comprend au moins une ouverture de coque (13), et la première unité de fixation (26) du dispositif d'amortissement à clapet (24) est fixée à la coque (12) du navire à sustentation pneumatique (10) de manière étanche, empêchant l'eau de pénétrer dans la coque (12) par l'ouverture de coque (13), et de telle sorte que la trappe d'inspection (34) du dispositif d'amortissement à clapet (24) est accessible par l'ouverture de coque (13) depuis l'intérieur de la coque (12).

15. Navire à sustentation pneumatique selon l'une quelconque des revendications 13 à 14,
dans lequel la pression de la source d'air sous pression est réglable afin de régler la pression de la cavité d'air (42) afin de régler la longueur et la rigidité du ressort du dispositif d'amortissement à clapet (24) sur la base d'un système de commande comprenant des capteurs qui transmettent la vitesse de déplacement et/ou les forces externes exercées sur le clapet de navire et/ou les paramètres liés à l'état des vagues et/ou d'autres paramètres pertinents à l'unité de commande du système de commande qui commande et règle en permanence la pression de l'air dans la cavité d'air sur la base des données reçues des capteurs et d'un effet d'amortissement souhaité du dispositif d'amortissement à clapet (24).
